# EUROPÄISCHE PATENTANMELDUNG

(11) **EP 2 262 069 A2**
(43) Veröffentlichungstag der Anmeldung: **15.12.2010**
(21) Anmeldenummer: 10165150.3
(22) Anmeldetag: 07.06.2010
(51) Int. Cl.: H02G 3/04

(54) **Vorrichtung für die Medien- und Energieversorgung**

(30) Priorität: 10.06.2009 CH 9132009; 05.07.2009 EP 09164608
(71) Anmelder: ZURECON AG, 8003 Zürich (CH)
(72) Erfinder: Pfluger, Gerd, CH-4625, Oberbuchsiten (CH)
(74) Vertreter: Rutz & Partner

(57) **Zusammenfassung**

Vorrichtung (1) für die Medien- und Energieversorgung innerhalb eines Raumes mit wenigstens einer Versorgungsstation (10), in der der Medien- und Energieversorgung dienende Versorgungsleitungen (91, 92, 93) zu Anschlüssen (31, 32, 33) geführt sind. Erfindungsgemäss weist die Versorgungsstation (10) wenigstens zwei oberhalb von Arbeitsplätzen (8) mit der Decke (2) des Raumes verbundene Deckenstützen (11) auf, an denen erste Kopplungselemente (111; 112) vorgesehen sind, die an wählbarer Position mit zweiten Kopplungselementen (131; 1310) von wenigstens zwei übereinander angeordneten Tragvorrichtungen (13) lösbar verbunden sind, von denen eine zumindest einen Teil der Versorgungsleitungen (91, 92, 93) trägt und dass eine Verkleidung (12) vorgesehen ist, welche die Deckenstützen (11) und die Tragvorrichtungen (13) zumindest auf einer Seite abdeckt und wenigstens ein bewegliches Zugangselement (121, 122) aufweist, nach dessen Öffnung die Tragvorrichtungen (13) mit den Versorgungsleitungen (91, 92, 93) zugänglich sind, die zu den Anschlüssen (31, 32, 33) geführt sind, die an der Verkleidung (12) und/oder an einer innerhalb der Verkleidung (12) vorgesehenen Anschlussvorrichtung (30) montiert sind.

## Beschreibung

Die Erfindung betrifft eine Vorrichtung für die Medien- und Energieversorgung nach dem Oberbegriff des Patentanspruchs 1.

Um Arbeitsplätze in Labors mit Strom, Gas, Wasser, Druckluft, Vakuum, usw. zu versorgen, und um Gas und Wasser oder dergleichen abzuführen, ist es gemäss [1], DE 101 27 272 A1, bekannt, Medienzellen, Mediensäulen oder Medienampeln für die Arbeitsplätze vorzusehen.

Dazu ist in [1] eine Einrichtung mit einer Installationsstation beschrieben, welche über ein Tragelement mit quer dazu verlaufenden Auslegern verbunden ist, die von Stützen getragen sind, die auf dem Laborboden aufgestellt sind. Das Tragelement, in dem die Versorgungsleitungen von der Installationsstation zu den Auslegern geführt sind, ist einerseits von der Installationsstation und andererseits von einer zugewandten Stütze der Ausleger getragen. Diese Einrichtung, mit der Installationsstation und den für das Tragelement und die Ausleger vorgesehenen Stützen, beansprucht relativ viel Raum innerhalb des Labors. Besonders nachteilig ist, dass die Einrichtung auf dem Boden steht und daher wesentliche Einschränkungen für die weitere Realisierung der Infrastruktur des Labors mit sich bringt.

Diese Nachteile werden mit der aus [2], EP 1684393 A1, bekannten Vorrichtung vermieden, die mit der Decke des Labors verbunden ist. Diese Vorrichtung besteht aus Deckenstützen, die mit Längs- und/oder Querprofilen zu einem räumlichen Fachwerk verbunden sind, welches dem Führen bzw. Halten von Versorgungsleitungen und/oder dafür vorgesehenen Tragvorrichtungen dient. Unterhalb des Fachwerks wird normalerweise eine abgehängte Decke vorgesehen, welche das Fachwerk vom Rest des Raumes trennt. Die Medienversorgung erfolgt typischerweise über sogenannte Mediensäulen, die von der Decke nach unten zum Arbeitsplatz geführt sind. An diesen Mediensäulen kann der Laborant seine Geräte anschliessen.

Vorteilhaft bei dieser Vorrichtung ist, dass der Laborboden für die Installation dieser Vorrichtung nicht beansprucht und für die weitere Infrastruktur des Labors freigehalten wird. Ferner können beliebige Versorgungsleitungen fachmännisch verlegt werden, die innerhalb von Labormöbeln nicht installierbar sind. Nachteilig ist hingegen der hohe Raumbedarf. Durch die Installation einer abgehängten Decke wird ein erheblicher Teil des Raums in Anspruch genommen, ohne dass daraus ein direkter Nutzen resultiert. Insbesondere in Labors, in denen möglichst viel Freiraum, z.B. für weitere Installationen, gewünscht wird, resultieren dadurch wesentliche Nachteile. Zu beachten ist, dass in den Labors auch die zumeist teuren Labormöbel, welche Speicherraum für Laborgeräte und Instrumente zur Verfügung stellen, relativ viel Platz in Anspruch nehmen.

Besonders nachteilig ist ferner, dass mit dieser bekannten Vorrichtung ein relativ hoher Material- und Installationsaufwand resultiert. Es werden zahlreiche Deckenstützen und Querstreben benötigt, um eine stabile Konstruktion zu schaffen und um diese sicher zu montieren.

Ferner resultiert ein beträchtlicher Aufwand zur Installation von Mediensäulen, mittels derer die oberhalb der abgehängten Decke geführten Medien dem Anwender am Arbeitsplatz zugänglich gemacht werden

Weiterhin ist zu beachten, dass die Infrastruktur in Labors regelmässig ändert. Regelmässig werden neue Instrumente installiert oder ersetzt, weshalb auch die entsprechenden Leitungen und Anschlüsse zu ergänzen oder zu ändern sind. Dazu muss der Betriebsingenieur bei dieser bekannten Lösung mit erheblichem Aufwand in den Bereich der installierten Vorrichtung oberhalb der abgehängten Decke eingreifen, z.B. um die Mediensäulen an anderen Stellen anzukoppeln und zu installieren.

Zu beachten ist ferner, dass in Labors oft aufwendige Laborkapellen oder Laborabzüge eingesetzt werden, deren Anforderungen in der europäischen Norm EN 14175 festgelegt sind. Bekannte Laborkapellen werden von Herstellern separat geliefert und sind typischerweise in der Art eines Schrankes aufgebaut. Eine geeignete Wandkonstruktion sorgt für die Luftführung und Schadgaserfassung. Der Zugang zur Laborkapelle ist durch wenigstens einen Frontschieber aus Verbundsicherheitsglas gewährleistet, der horizontal oder vertikal verschiebbar ist. Die Laborkapelle umfasst eine Arbeitsplatte, die typischerweise mit einem Ablauftrichter ausgerüstet ist. Weiterhin sind Unterbauten einsetzbar, die für das Arbeiten mit Gefahrstoffe nach DIN 12925 ausgelegt sind. Die Laborkapellen sollen den Innenraum dicht abschliessen und das entweichen von Gasen verhindern. Die Strömungen der Gase und somit das Ausbruchsverhalten wird zumeist elektronisch überwacht.

Derartige bekannte Laborkapellen werden in zahlreichen verschiedenen Varianten gefertigt, so dass für jedes Labor passende Einheiten zur Verfügung gestellt werden können. Aufgrund des breiten Sortiments, welches aufgrund der vielen verschiedenen Anwendungsfälle erforderlich ist, ergibt sich ein sehr hoher Herstellungsaufwand mit entsprechenden Kosten.

Der Medienzugang ist zumeist an der Oberseite der Laborkapelle vorgesehen, weshalb auch bei dieser Vorrichtung viel Raum in Anspruch genommen wird, der in der Folge mit Medienblenden abgedeckt werden muss. Eine optimale Integration der Laborkapelle in die Infrastruktur des Labors ist oft kaum möglich. Ferner ist bekannt, dass die im Labor durchgeführten Experimente eine entsprechende Breite der Laborkapelle erfordern. In der Vergangenheit hat sich gezeigt, dass sich die gewünschten Breiten der Laborkapellen stetig erhöht haben (z.B. von 1,2 m bis 1,8m), weshalb oft die gesamte Laborkapelle ersetzt werden musste.

Vorrichtungen für die Medien- und Energieversorgung sind ferner aus [3], DE 10314685 A1, und [4], EP 1916749 A2, bekannt, bei denen das der Medienversorgung dienende Teil, nämlich ein Medienkanal oder ein kanalartiges Bauteil, mittels Hängehaltern von der Decke abgehängt ist. Der Medienkanal ist dabei derart ausgestaltet, dass darin die benötigten Medienleitungen geführt werden können. Zur Versorgung der Arbeitsplätze ist der Medienkanal mit Armen versehen, über die einzelne Medienleitungen zu Anschlussfeldern geführt sind. Die beschriebenen Vorrichtungen weisen dabei verschiedene Nachteile auf. Die gesamte Infrastruktur der Medienleitungen muss innerhalb eines Kanals untergebracht werden, wodurch räumliche Probleme resultieren, die eine Strukturierung und eine wahlweise Verlegung der Medienleitungen erschweren. Insbesondere ist die erste Installation der Vorrichtung mit hohem Aufwand verbunden, da alle Medienleitungen in dem nicht leicht zugänglichen Medienkanal anzuordnen sind. Besonders aufwändig gestalten sich konsequenterweise auch Änderungen der Infrastruktur sowie Wartungsarbeiten, die einen Eingriff in den Medienkanal erfordern. Der Medienkanal ist zudem auf die Führung von Medienleitungen beschränkt, weshalb ein weiterer Nutzen dieser Vorrichtung entfällt. Insbesondere ist zu beachten, dass der für die Medien- und Energieversorgung vorgesehene von der Decke abgehängte Kanal sowie die daran vorgesehenen Versorgungsarme die Möglichkeiten zur weiteren Einrichtung eines Labors oder einer Werkstatt wesentlich beschränken. Die weitere Einrichtung des Labors oder der Werkstatt ist daher an die installierte Vorrichtung zur Medien- und Energieversorgung anzupassen, weshalb insgesamt mit erheblichen Kosten zu rechnen ist.

Aus [5], EP 2058911 A1, ist ferner eine für den Medizinbereich vorgesehene Versorgungsvorrichtung bekannt, die einen langgestreckten Träger mit einer Kopplungseinrichtung aufweist, die sich entlang des Trägers erstreckt. Die medizinische Versorgungseinheit wird mittels einer Deckenbefestigungsvorrichtung installiert, die zwei gelenkig miteinander verbundene Auslegerarme aufweist, mittels derer die Versorgungseinheit horizontal verschoben werden kann. Diese verschiebbare Vorrichtung betrifft daher die Feinverteilung der zu einem Punkt der Decke geführten Medien und erfordert ebenfalls viel Raum.

Der vorliegenden Erfindung liegt daher die Aufgabe zugrunde, eine verbesserte Vorrichtung für die Medien- und Energieversorgung zu schaffen.

Die Vorrichtung, die mit geringen Kosten und geringem Aufwand herstellbar und installierbar sein soll, soll den zur Verfügung gestellten Raum optimal nutzen und die Installation der weiteren Laborinfrastruktur nicht behindern. Insbesondere soll der Anwender in seiner Freiheit am Boden des Labors, beim Transport von Sachen oder in der wahlweisen Anordnung von Möbeln oder Vorrichtungen nicht behindert werden.

Die Vorrichtung soll erlauben, beliebige Labor- und Werkstatteinrichtungen in einem Raum zu installieren und mit reduziertem Aufwand an geänderte Bedürfnisse anzupassen. Insbesondere sollen notwendige Änderungen der Infrastruktur im Labor oder in der Werkstatt rasch und mit minimalem Aufwand vollzogen werden können.

Insbesondere soll der punktuelle Zugriff zu einzelnen Versorgungsleitungen mit minimalem Aufwand möglich sein, z.B. um neue Anschlüsse und Armaturen innerhalb von Minuten zu installieren.

Ferner sollen anhand der Vorrichtung auch Versorgungsleitungen für Medien und Energie verlegt werden können, die nicht für die lokale Labor- und Werkstatteinrichtung vorgesehen sind.

Weiterhin soll die Vorrichtung innerhalb des Labors oder der Werkstatt nur wenig Platz in Anspruch nehmen und optisch nicht störend in Erscheinung treten.

Ferner sollen teure Labormöbel vermieden werden, durch die Speicherraum für Laborgeräte und Instrumente zur Verfügung gestellt werden soll.

Mittels der erfindungsgemässen Vorrichtung sollen ferner Laborkapellen vorteilhaft in die Infrastruktur des Labors integrierbar sein. Diese Laborkapellen sollen den gegebenen Normen genügen und kostengünstig und Raum sparend realisierbar sein. Ferner sollen diese Laborkapellen mit geringem Aufwand an aktuelle und zukünftige Anforderungen des Anwenders anpassbar sein.

Diese Aufgabe wird mit einer Vorrichtung gelöst, welche die in Anspruch 1 angegebenen Merkmale aufweist. Vorteilhafte Ausgestaltungen der Erfindung sind in weiteren Ansprüchen angegeben.

Die Vorrichtung, die der Medien- und Energieversorgung innerhalb eines Raumes dient, besteht aus wenigstens einer Versorgungsstation mit wenigstens zwei oberhalb von Arbeitsplätzen mit der Decke des Raumes verbundenen Deckenstützen, die wenigstens eine Tragvorrichtung halten, welche der Medien- und Energieversorgung dienende Versorgungsleitungen trägt.

Erfindungsgemäss weist die Versorgungsstation wenigstens zwei oberhalb von Arbeitsplätzen mit der Decke des Raumes verbundenen Deckenstützen auf, an denen erste Kopplungselemente vorgesehen sind, die an wählbarer Position mit Kopplungselementen von wenigstens zwei übereinander angeordneten Tragvorrichtungen lösbar verbunden sind, von denen eine zumindest einen Teil der Versorgungsleitungen trägt und dass eine Verkleidung vorgesehen ist, welche die Deckenstützen und die Tragvorrichtungen zumindest auf einer Seite abdeckt und wenigstens ein bewegliches Zugangselement aufweist, nach dessen Öffnung die Tragvorrichtungen mit den Versorgungsleitungen zugänglich sind, die zu den Anschlüssen geführt sind, die an der Verkleidung und/oder an einer innerhalb der Verkleidung vorgesehenen Anschlussvorrichtung montiert sind.

Durch diese Lösung werden zwei Systeme, nämlich das System der Kabelführung und das System der Laboreinrichtung, zusammengeführt, wodurch verschiedene Vorteile resultieren. Mittels der Deckenstützen und der Tragvorrichtungen wird ein Installationssystem für die Verlegung der Medienleitungen geschaffen, die zu den Arbeitsplätzen geführt werden. Dabei erfolgt kein abrupter Übergang von diesem Installationssystem zur Infrastruktur des Labors. Stattdessen wird in der Versorgungsstation ein wesentlicher Teil der Infrastruktur des Labors integriert. Die Funktion von Labormobiliar, welches der Aufnahme von Laborgeräten und Instrumenten dient, wird ebenfalls durch die Versorgungsstation zur Verfügung gestellt. Die Deckenstützen werden dabei derart dimensioniert, dass Tragvorrichtungen für die Versorgungsleitungen sowie Tragvorrichtungen mit Regalen montiert werden können, die der Lagerung von Laborgeräten und Instrumenten dienen. Durch die Versorgungsstation wird daher gleichzeitig preisgünstig Speicherraum für Laborgeräte zur Verfügung gestellt, weshalb auf Labormöbel teilweise verzichtet werden kann. Die Tragvorrichtungen, z.B. Flachgitterprofile, können vorteilhaft als Regale genutzt werden. Alternativ können auch Regale aus Holz oder Kunststoff verwendet werden, die beispielsweise von einer Schreinerei geliefert werden.

Mit der erfindungsgemässen Lösung kann eine voluminöse Installation mit abgehängter Decke oder mit einem abgehängten Medienkanal vermieden werden. Aufgrund der Vermeidung einer abgehängten Decke kann der Raum bis zur tatsächlichen Gebäudedecke genutzt werden, weshalb Labors, die mit der erfindungsgemässen Vorrichtung ausgestattet sind, nicht nur grosszügiger erscheinen, sondern auch eine angenehmere Atmosphäre bieten. Durch die Vermeidung eines gesonderten Medienkanals werden Konflikte mit separatem Labormobiliar vermieden, welches in die erfindungsgemässe Vorrichtung integriert werden kann. Die erfindungsgemässen Versorgungsstationen können aufgrund der einfachen Zugriffsmöglichkeit mit minimalem Aufwand installiert, gewartet und gereinigt werden.

Besonders wesentlich ist, dass es anhand der wenigstens zwei Tragvorrichtungen möglich ist, eine Ordnungstrennung in einfacher Weise zu realisieren. Auf einer ersten Ebene bzw. einer ersten Tragvorrichtung können flüssige und gasförmige Medien geführt werden, auf einer zweiten Ebene bzw. einer zweiten Tragvorrichtung können elektrische Leitungen geführt werden und in wenigstens einer dritten Ebene bzw. auf wenigstens einer dritten Tragvorrichtung kann der Anwender Labormaterial und Geräte speichern.

Es ist zu beachten, dass nicht nur die Installation der Vorrichtung besonders einfach ist, sondern dass die Versorgungsleitungen problemlos installiert und gewartet werden können. Dabei wird der zur Verfügung stehende Raum optimal genutzt. Die Tragvorrichtungen können dabei wahlweise mit den Deckenstützen gekoppelt werden, so dass die Vorrichtung optimal an die Bedürfnisse des Anwenders angepasst werden kann. Sofern zu einem späteren Zeitpunkt wesentliche Änderungen der Infrastruktur vorzunehmen sind, so können die Positionen der Tragvorrichtungen mit wenigen Handgriffen bedarfsweise geändert werden. Weiterhin können Tragvorrichtungen bedarfsweise eingesetzt oder entnommen werden. Ferner lässt sich die erfindungsgemässe Vorrichtung individuell an die Bedürfnisse jedes Anwenders anpassen. Der modulare Aufbau der erfindungsgemässen Vorrichtung führt gegenüber bekannten Vorrichtungen somit zu zahlreichen wichtigen Vorteilen.

Zusätzlich zu den weiteren Vorteilen werden alle Vorteile der bekannten Vorrichtung in die erfindungsgemässe Vorrichtung übernommen. Ebenso, wie bei einer abgehängten Decke, wird der Laborboden nach der Installation der Versorgungsstationen für die weitere Infrastruktur des Labors vollständig freigehalten. Ferner können in den Versorgungsstationen alle in Frage kommenden Versorgungsleitungen, wie Wasserleitungen, Gasleitungen, Stromleitungen, insbesondere auch Stromschienen verlegt werden, was innerhalb von Laboreinrichtungen ansonsten nicht möglich ist. Dabei ist es auch möglich, die Versorgungsstationen auf einer Ebene als Transferkanal für Medien zu Nutzen, die in anderen Räumen, z.B. in einer an ein Labor angrenzenden Werkstatt benötigt werden. Dadurch können die Versorgungsstationen nicht nur für lokale, sondern auch für Zwecke verwendet werden, die dem gesamten Gebäude dienen.

Die in der Versorgungsstation gelagerten Medienleitungen können bedarfsweise angezapft und durch Anschlussleitungen mit Anschlüssen, einschliesslich Armaturen, verbunden werden, die an einer Anschlussvorrichtung innerhalb der Verkleidung oder direkt an der installierten Verkleidung selbst montiert sind.

Die Verkleidung dient daher einerseits bedarfsweise der Montage der Anschlüsse bzw. Armaturen. Andererseits dient die Verkleidung der Abdeckung der Tragstruktur der Vorrichtung. Durch die Verkleidung erhalten die Versorgungsstationen zudem eine passende ästhetische Ausgestaltung, wie sie konventionelle Labormöbel, z.B. auch im Hochpreissegment, aufweisen. Aufgrund der einfachen Ausgestaltung der Verkleidung resultieren auch bei der Wahl hochwertiger Materialien nur vergleichsweise geringe Kosten.

Besonders vorteilhaft ist ferner, dass bei der erfindungsgemässen Vorrichtung auf die so genannten Mediensäulen verzichtet werden kann. Obwohl bei den bekannten Vorrichtungen mit abgehängter Decke viel Raum in Anspruch genommen wird, bieten die damit verbundenen Mediensäulen nur wenig Platz für die Montage der Anschlüsse. Bei der erfindungsgemässen Vorrichtung, die relativ wenig Raum in Anspruch nimmt, ist es hingegen möglich, die Anschlüsse an verschiedenen Stellen geordnet zu montieren. Dabei ist es sogar möglich, einzelne Anschlussgruppen getrennt nach Medien und Anwender vorzusehen und gegebenenfalls farblich zu kennzeichnen. Dies ist nicht zuletzt deshalb wichtig, weil mit den Medien auch Gefahrenquellen verknüpft sind, vor denen der Anwender zu schützen ist. Z.B. kann eine Anschlussgruppe für Kommunikationsinstrumente, eine Anschlussgruppe für die Stromversorgung, eine Anschlussgruppe für Gas und eine Anschlussgruppe für Flüssigkeiten vorgesehen werden.

Nach der Installation ist grundsätzlich kein optischer Unterschied zwischen der erfindungsgemässen Vorrichtung und dem konventionellen Mobiliar eines Labors erkennbar. Der Betrachter sieht lediglich die Verkleidung, die aus beliebigen Materialien, wie Holz oder Kunststoff, gefertigt werden kann. Anstelle der Rohr- und Kabelführungsvorrichtungen ist nur die ästhetisch vorteilhafte Verkleidung sichtbar. Auch innerhalb der Verkleidung können Teile der Rohr- und Kabelführungsvorrichtung durch Blenden abgedeckt werden, so dass der Bereich der Vorrichtung, in dem die Versorgungsleitungen verlegt sind, nur dem Betriebsingenieur zugänglich ist und der Raum mit den Regalen wie bei konventionellen Möbeln abgeschlossen ist.

In vorzugsweisen Ausgestaltungen wird ferner vorgesehen, dass die Zugangselemente abschliessbar sind. Dies erlaubt dem Anwender, zu schützende oder gefährliche Materialien sowie persönliche Utensilien vor dem Zugriff Unbefugter zu schützen. Die abschliessbaren Zugangselemente können Platten mit Schlössern oder auch Rollläden sein, die z.B. mittels Schloss und Schlüssel abgeschlossen werden.

Die Verkleidung kann auf verschiedene Arten montiert werden. Die Verkleidung kann unabhängig von der durch die Deckenstützen und die Tragvorrichtungen gebildeten Tragstruktur mit der Decke verbunden werden. Auf diese Weise ist es möglich, dass die gesamte Verkleidung, z.B. von einer Schreinerei, gänzlich unabhängig von der gesamten Tragstruktur gefertigt und installiert wird. Der Medienmonteur kann z.B. die Tragstruktur mit den Deckenstützen und den Tragvorrichtungen installieren, wonach die Verkleidung von einem Schreiner montiert wird. Vorzugsweise wird die Verkleidung jedoch modular hergestellt und geliefert, so dass sie in einfacher Weise ebenfalls vom Medienmonteur installiert werden kann.

In besonders vorteilhaften Ausgestaltungen werden die beweglichen Zugangselemente an Führungsschienen montiert, die direkt an der Decke angeschlagen sind. Bei dieser Ausgestaltung können die Zugangselemente in der Art einer Schublade ausgezogen und vorzugsweise dicht abschliessend wieder geschlossen werden. Nach dem Ausziehen der Zugangselemente können der Anwender auf die Regale und der Betriebsingenieur auf die Versorgungsleitungen zugreifen. Vorzugsweise werden jedoch auch hier der für die Speicherung von Laborgeräten und der für die Versorgungsleitungen vorgesehene Raum voneinander getrennt und separat verschlossen.

Die Verkleidung kann ferner direkt von den Deckenstützen gehalten werden. Dies hat den Vorteil, dass an der Decke weniger Verbindungsstellen resultieren. Z.B. kann die Verkleidung in einfacher Weise an den stabil montierten Deckenstützen eingehängt werden. Dazu werden z.B. spezielle Ausleger mit der Deckenstütze verbunden. Ferner können die Deckenstützen mit Montageelementen versehen werden, die ausschliesslich dem Halten der Verkleidung dienen.

Die Versorgungsleitungen werden vorzugsweise auf der obersten und/oder der untersten Ebene geführt, so dass der weitere Raum für Regale zur Verfügung steht. Sofern die Versorgungsleitungen auf der untersten Ebene geführt werden, so werden die Anschlüsse vorzugsweise an der Unterseite der Vorrichtung vorgesehen.

Die Anschlüsse und Armaturen können an beweglichen oder an unbeweglichen Elementen der Verkleidung oder an einer Anschlussvorrichtung innerhalb der Verkleidung montiert werden. Weiterhin ist es möglich, die Anschlüsse bzw. Armaturen an vorzugsweise mit dem Fuss der Deckenstützen verbundenen Basisplatten zu montieren. Die Montage der Anschlüsse bzw. Armaturen an den beweglichen Zugangselementen hat den Vorteil, dass der Betriebsingenieur die Anschlüsse bzw. Armaturen in einfachster Weise freilegen und auf diese von beiden Seiten zugreifen kann. Ferner kann es vorteilhaft sein, Anschlussvorrichtungen innerhalb der Verkleidung vorzusehen, von denen Anschlussleitungen z.B. durch Öffnungen aus der Verkleidung herausgeführt werden.

Die Deckenstützen können mittels Schrauben stationär oder mittels einer Verschiebevorrichtung verschiebbar gelagert mit der Decke verbunden werden. Eine stationäre Installation wird typischerweise dann vorgesehen, wenn die Infrastruktur des Labors oder der Werkstatt abschliessend festgelegt ist. Die verschiebbare Lagerung der Vorrichtung wird hingegen vorgesehen, wenn regelmässig mit Veränderungen, insbesondere einem Ausbau der Infrastruktur zu rechnen ist. Sofern die Arbeitsplätze umgestellt werden, können die Versorgungsstationen zu diesen hin verschoben werden. Dabei sind lediglich die Abzweiger zu den Stammleitungen neu zu setzen. Die Verschiebung einer Versorgungsstation zu einer neuen Position kann durch den Betriebsingenieur daher innerhalb von Minuten vollzogen werden, was bei fester Montage der Deckenstützen nicht denkbar ist. Zudem verbleiben nach der Verschiebung der Versorgungsstation keine Beschädigungen an den Decken, die saniert werden müssten.

Die Installation einer Verschiebevorrichtung dürfte sich bereits bei Vorrichtungen lohnen, die nur zwei Versorgungsstationen aufweisen. Sofern mit einem späteren Ausbau der Infrastruktur des Labors gerechnet wird, ist die Verwendung der Verschiebevorrichtung stets vorzuziehen.

Von Interesse ist, dass durch die Verwendung einer Verschiebevorrichtung eher ein geringerer als ein höherer Aufwand resultiert. Die Verschiebevorrichtung weist z.B. zwei Schienen mit darin geführten, gleitenden oder rollenden Laufwerken auf, durch die z.B. eine Querstrebe gehalten wird. An der Querstrebe können die Kopfstücke der Deckenstützen in einfacher Weise montiert, z.B. eingehängt werden. Dabei ist es möglich, dass zwei Querstreben geführt werden, um die Versorgungsstation zu stabilisieren und senkrecht zu halten. Alternativ können die Versorgungsstationen auch nur entlang einer Achse gehalten und an einem weiteren Punkt abgestützt werden. Zu beachten ist ferner, dass eine Verschiebung der Versorgungsstationen nur selten erfolgt, weshalb die Verschiebevorrichtung äusserst einfach ausgestaltet werden kann. Z.B. ist es möglich die Laufwerke auf ein Endstück des Montagebalkens zu reduzieren, an dem die Deckenstützen befestigt sind.

Nebst dem seitlichen Verschieben mittels einer Verschiebevorrichtung ist es auch möglich, die Vorrichtung in der Höhe zu verstellen. Dies ist besonders einfach möglich, indem zweiteilige Deckenstützen verwendet werden, die z.B. teleskopartig ausgezogen und fixiert werden können. Dies ist insbesondere deshalb besonders nützlich, weil die Vorrichtung mit einfachsten Massnahmen an die Bedürfnisse der Anwender angepasst werden kann. Dabei ist es möglich jede der Versorgungsstationen auf eine vom jeweiligen Anwender festgelegte Höhe einzustellen.

Die Tragvorrichtungen können aus geformtem Material, wie Blech oder Plastik, gefertigt werden. Besonders vorteilhaft sind aus Gitter gefertigt Vorrichtungen, wie Gitterkanäle einsetzbar, welche direkt oder je mittels eines Auslegers mit den Deckenstützen verbunden werden. Gitterkonstruktionen, welche direkt mit einer Deckenstütze verbindbar sind, sind z.B. aus [6], EP 0355081 A1 und [7], EP 1577995 A1 bekannt. Deckenstützen mit einem Ausleger, von dem ein Kabelkanal getragen wird, sind aus der [8], EP 1594204 A1 bekannt. Grundsätzlich sind jedoch beliebige Deckenstützen, Ausleger, und Rohr- sowie Kabelführungsvorrichtungen einsetzbar.

Die Deckenstützen weisen z.B. einseitig oder beidseitig Kopplungselemente, wie Haken und/oder Öffnungen auf, in welche Kopplungselemente der Tragvorrichtungen oder der Ausleger eingehängt werden können, auf die Regale oder ein Kanal aufgesetzt werden können.

Die Verwendung von Tragvorrichtungen, die aus Gitter gefertigt sind, hat verschiedene Vorteile. Die Versorgungsleitungen werden belüftet und sind gekühlt und trocken gehalten. Ferner können die Versorgungsleitungen durch die Gitter hindurch geschlauft werden. Weiterhin resultiert nur ein geringes Gewicht.

Die erfindungsgemässe Vorrichtung erlaubt ferner eine besonders vorteilhafte Realisierung von Laborkapellen, die Raum sparend in die Infrastruktur des Labors eingefügt und später mit vergleichsweise geringem Aufwand ausgebaut werden können.

In einem Labor oder in einer Werkstatt werden typischerweise mehrere Versorgungsstationen vorgesehen, so dass eine entsprechende Anzahl von Arbeitsplätzen je mit Medien versorgt werden kann.

Nachfolgend wird die Erfindung anhand von Zeichnungen näher erläutert. Dabei zeigt:
- Fig. 1: eine erfindungsgemässe Vorrichtung 1 zur Medien- und Energieversorgung von Laborarbeitsplätzen 8, mit zwei Versorgungsstationen 10 mit je zwei innerhalb einer Verkleidung 12 angeordneten Deckenstützen 11, die eine Tragvorrichtung 13, in der Versorgungsleitungen 91, 92, 93 verlegt sind, sowie ein Regal 133 halten;
- Fig. 2: eine erfindungsgemässe Vorrichtung 1, welche beidseits davon liegende Arbeitsplätze 81, 82 mit Medien versorgt und zwei Regale 133 zur Aufnahme von Laborgeräten und Instrumenten aufweist;
- Fig. 3: von oben eine erfindungsgemässe Vorrichtung 1 zur Medien- und Energieversorgung von Laborarbeitsplätzen 8, mit zwei entlang von Schienen 71, 72 verschiebbaren Versorgungsstationen 10;
- Fig. 4: eine Versorgungsstation 10 der Vorrichtung 1 von Figur 3 in vorzugsweiser Ausgestaltung;
- Fig. 4a: eine Verschiebevorrichtung 7 mit einer von einem Laufwerk 70 gehaltenen Deckenstütze 11; und
- Fig. 5: eine symmetrisch ausgestaltete Versorgungsstation 10;
- Fig. 6: eine Versorgungsstation 10 mit einer Verkleidung 12, welche ausziehbare Zugangselemente 121, 122 aufweist, an einem an der Decke 2 montierten Schienenauszug 1250, 1251 gehalten sind;
- Fig. 7: eine Versorgungsstation 10 mit integrierter Laborkapelle 4; und
- Fig. 8: ein Ausführungsbeispiel eines Auslegers 130, welcher einen Tragarm 1301 aufweist, welcher an einem Ende mit einer Montagelatte 1302 versehen ist.

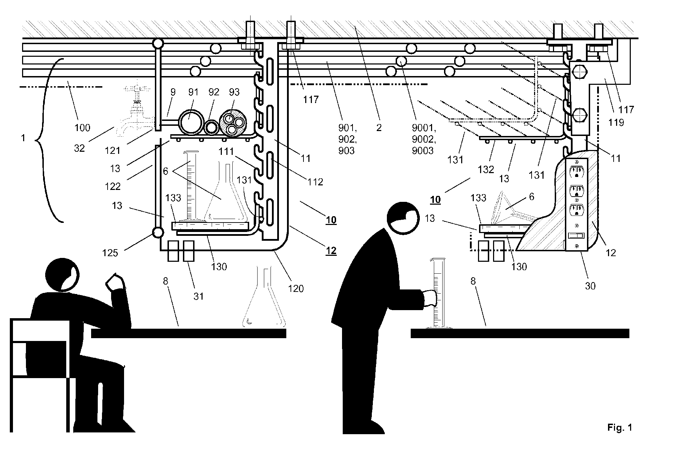

Figur 1 zeigt eine erfindungsgemässe Vorrichtung 1 zur Medien- und Energieversorgung von Laborarbeitsplätzen 8, mit zwei Versorgungsstationen 10, die an der Decke 2 befestigt sind. Jede der Versorgungsstationen 10 weist wenigstens zwei Deckenstützen 11 auf, die mittels Montageschrauben 117 in der Decke 2 verankert sind. An den Deckenstützen 11 jeder Versorgungsstation 10 ist je eine kanalförmige Tragvorrichtung 13 befestigt.

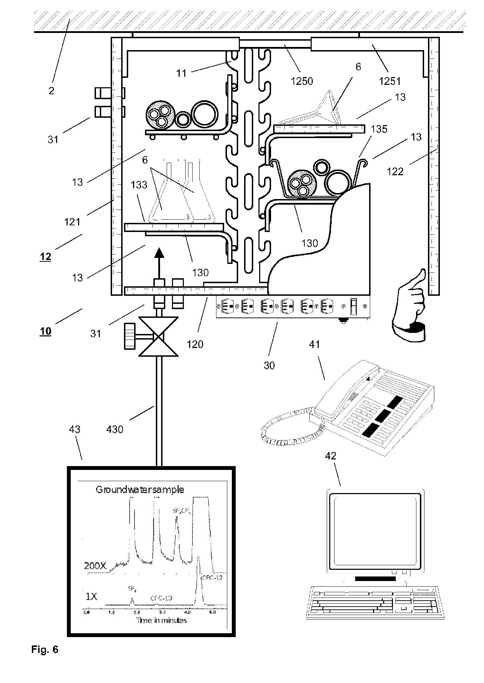

Es ist gezeigt, dass in dieser Ausgestaltung jede Tragvorrichtung 13 ein Gitterkanal mit L-förmigen Querstegen 132 und geraden Längsstegen 131 ist, die in Haken 111 eingehängt sind, die an einer Seite der Deckenstützen 11 angeordnet sind. Die Verwendung von Gitterkanälen 13 hat den Vorteil, dass diese ohne zusätzliche Installationsmittel mit der Deckenstütze 11 verbunden werden können. Dabei werden vorzugsweise Gitterkanäle 13 verwendet, die L- oder C-förmig ausgestaltet sind. Alternativ sind auch konventionelle Kabelkanäle 13 einsetzbar, die auf Ausleger 130 aufgesetzt werden, wie dies in Figur 6 gezeigt ist. Die Kabelkanäle und Gitterkanäle können aus beliebigen Materialien, wie Metall und Kunststoff oder beschichtetem Metall, bestehen.

In den Tragvorrichtungen 13 sind die am Arbeitsplatz 8 benötigten Versorgungsleitungen 91, 92, 93 verlegt.

An den Deckenstützen 11 sind ferner Ausleger 130 befestigt, von denen Regale 133 gehalten werden. Auf den Regalen 133 sind Laborgeräte 6 und Instrumente gelagert, die vom Anwender bedarfsweise benutzt werden.

Jede der beiden Versorgungsstationen 10 weist eine Verkleidung 12 auf, in der die beschriebene Tragstruktur mit den Deckenstützen 11 und den Tragvorrichtungen 13 eingeschlossen ist. Die Versorgungsstationen 10 sind vorzugsweise auf allen Seiten abgeschlossen. Sofern die Versorgungsstationen 10 an einer Wand anliegen, wird auf eine Verkleidung an dieser Stelle vorzugsweise verzichtet.

Damit Zugriff zu den Versorgungsleitungen und zum gespeicherten Labormaterial möglich ist, weist die Verkleidung 12 bewegliche, insbesondere drehbare, seitlich oder frontal verschiebbare Zugangselemente 121, 122 auf. Die Zugangselemente 121, 122 können als Schiebetüren oder Schiebefenster, Klapptüren oder Klappfenster oder als ausziehbare Elemente, wie Schubladen ausgebildet sein. Die Beschläge zum drehbaren oder verschiebbaren Halten der Zugangselemente 121, 122 können Scharniere 125 oder Auszugsvorrichtungen 1250, 1251 sein (siehe Figur 6), die an der Verkleidung 12, direkt oder indirekt an den Deckenstützen 11 und/oder an der Decke 2 installiert sind.

Die Versorgungsleitungen sind über kurze Anschlussleitungen 9 zu Anschlüssen bzw. Armaturen 31, 32 geführt, an denen der Anwender die Medien, wie Wasser, Gas, Elektrizität, abnehmen kann. Die Anschlüsse 31, 32 können innerhalb oder ausserhalb der Verkleidung 12 an einer Anschlussvorrichtung 30 oder an der Verkleidung 12 selbst montiert sein. In Figur 1 ist eine Steckerleiste 30 gezeigt, welche seitlich an der Verkleidung 12 angeordnet ist. Die Steckerleiste 30 kann auch innerhalb der Verkleidung 12 angeordnet sein.

In vorzugsweisen Ausgestaltungen sind die Anschlüsse 31, 32 an den beweglichen Zugangselementen 121, 122, 123, 124 vorgesehen. Dies ist insbesondere dann von Vorteil, wenn der Betriebsingenieur von beiden Seiten auf die Anschlüsse 31, 32 zugreifen oder diese möglichst einfach montieren will. Bei der Montage der Anschlüsse 31, 32 an den beweglichen Zugangselementen 121, 122, 123, 124 ist jedoch darauf zu achten, dass genügend lange, flexible Anschlussleitungen 9 vorgesehen sind. Z.B. ist ein Wasserhahn 32 gezeigt, welcher am Zugangselement 121 montiert ist.

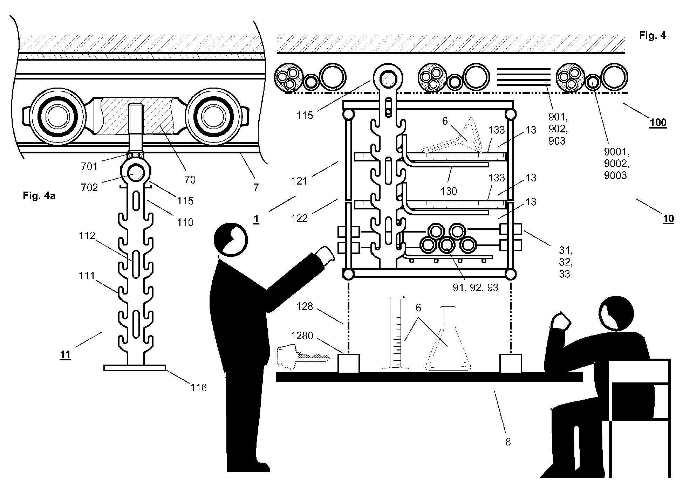

Sofern die Versorgungsleitungen 91, 92 ,93 auf der untersten Ebene geführt sind, so werden die Anschlüsse 31, 32 vorzugsweise auf der untersten Basisplatte 120 der Verkleidung 12 montiert. Diese Basisplatte 120 kann von den unteren Endstücken 116 (siehe Figur 4a) der Deckenstützen 11 gehalten sein. In diesem Fall wird vorzugsweise die gesamte Verkleidung 12 von der Basisplatte 120 getragen.

In Figur 1 ist ferner gezeigt, dass Stammleitungen 901, 902, 903 am Rand des Labors in einer Rohr- bzw. Kabelführungsvorrichtung 100 geführt sind. Die Stammleitungen 901, 902, 903 weisen Abzweigstellen 9001, 9002, 9003 auf, an die Versorgungsleitungen 91, 92, 93 angeschlossen sind. Diese Abzweigstellen 9001, 9002, 9003 werden vorzugsweise nahe im Bereich der geplanten Positionen der Versorgungsstationen 10 vorgesehen, so dass diese durch die Versorgungsstationen 10 abgedeckt werden. Dabei können Stammleitungen 901, 902, 903 mit mehreren Gruppen von Abzweigstellen 9001, 9002, 9003 vorgefertigt werden, welche erlauben, die Versorgungsstationen 10 an passenden Stellen anzuschliessen. Durch die Vorfertigung der Stammleitungen 901, 902, 903 mit mehreren Gruppen von Abzweigstellen 9001, 9002, 9003 wird eine hohe Qualität der Abzweigstellen 9001, 9002, 9003 gewährleistet und es werden nur minimale Mehrkosten verursacht.

In Figur 1 sind Versorgungsstationen 10 gezeigt, welche nur von einer Seite her zugänglich sind. Die Tragvorrichtungen 13 sind daher nur auf einer Seite der Deckenstützen 11 vorgesehen, weshalb diese einseitig belastet sind. Zur Kompensation dieser einseitigen Belastung können Stützelemente 119 vorgesehen werden, welche die seitliche Auslenkung der Deckenstützen 11 verhindern.

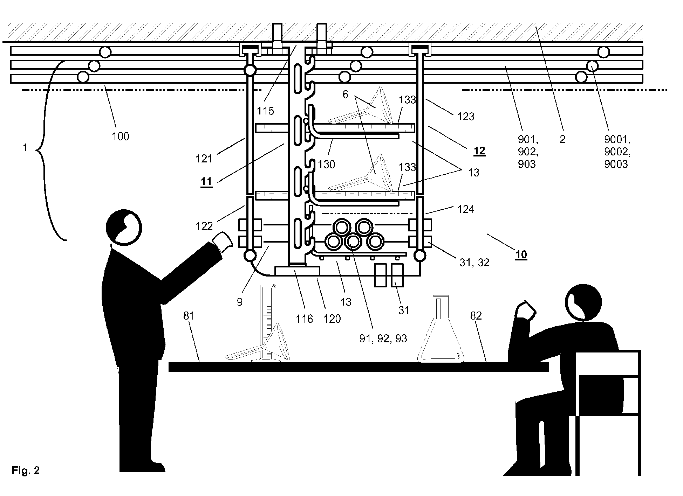

Figur 2 zeigt eine erfindungsgemässe Vorrichtung 1, welche beidseits davon liegende Arbeitsplätze 81, 82 mit Medien versorgt und zwei Tragvorrichtungen 13 mit Regalen 133 zur Aufnahme von Geräten und Instrumenten aufweist. Ferner ist eine dritte Tragvorrichtung 13 vorgesehen, auf der die Versorgungsleitungen 91, 92 und 93 angeordnet sind.

Am ersten Arbeitsplatz 81 kann der Anwender über erste Zugangselemente 121, 122 und am zweiten Arbeitsplatz über zweite Zugangselemente 123, 124 in die Versorgungsstation 10 eingreifen. Über die oberen Zugangselemente 121, 123 kann der Anwender von beiden Seiten auf die Regale 133 zugreifen. Der Betriebsingenieur, der für die Wartung der Vorrichtung 1 verantwortlich ist, kann hingegen über die unteren Zugangselemente 122, 124 auf die Versorgungsleitungen 91, 92, 93 zugreifen und diese über Anschlussleitungen 9 mit Anschlüssen 31, 32 verbinden, die an den Zugangselementen 122, 124 oder an der Basisplatte 120 vorgesehen sind. Der im Labor tätige Anwender wird daher nur die oberen beiden Zugangselemente 121, 123 benutzen und seine Apparate an die vorgesehenen Anschlüsse 31, 32 anschliessen. Dabei ist ersichtlich, dass die beiden installierten Regale 133 beiden Anwendern relativ viel Stauraum zur Verfügung stellen, während die auf der untersten Ebene geführten Versorgungsleitungen 91, 92, 93 nur wenig Platz in Anspruch nehmen.

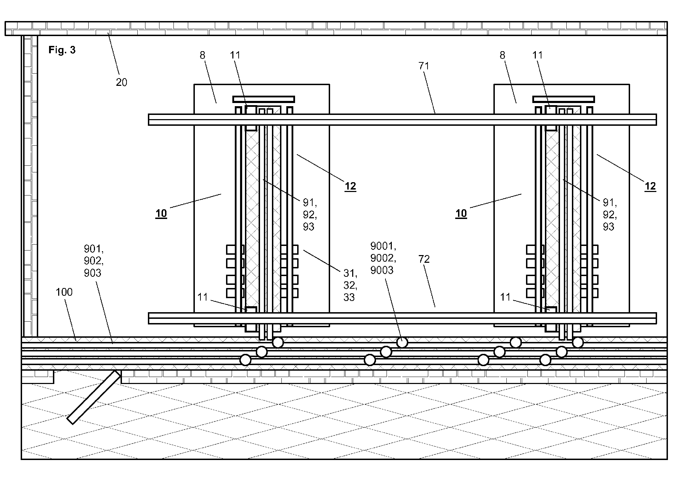

Figur 3 zeigt eine erfindungsgemässe Vorrichtung 1 von der Decke 2 her gesehen. Die Vorrichtung 1 weist zwei Versorgungsstationen 10 auf, die entlang von Schienen 71, 72 verschiebbar sind. Die Versorgungsstationen 10 entsprechen den vorstehend und nachstehend beschriebenen Ausführungsbeispielen. Die Deckenstützen 11 sind hingegen nicht direkt mit der Decke 2 verschraubt, sondern mit Laufwerken 70 verbunden, die entlang den Schienen 71, 72 geführt sind. Bei dieser Ausgestaltung der Erfindung können die Versorgungsstationen 10 daher an passende Stellen gefahren und dort fixiert werden. An diesen Stellen werden ferner die Versorgungsleitungen 91, 92, 93 mit einer Gruppe von Abzweigstellen 9001, 9002, 9003 der Stammleitungen 9001, 9002, 9003 verbunden.

Die Ergänzung der Vorrichtung 1 mit einer weiteren Versorgungsstation 10 ist daher mit minimalem Aufwand möglich, indem diese lediglich in die Schienen 71, 72 eingehängt und an die vorgesehene Stelle gefahren wird.

Figur 4 zeigt die erfindungsgemässe Vorrichtung 1 von Figur 3 mit einer vorzugsweise ausgestalteten Versorgungsstation 10, die entlang von Schienen 71, 72 verschiebbar und an der gewünschten Stelle fixierbar ist. Weiter ist in Figur 4 gezeigt, dass Zugangselemente 128 vorgesehen sind, welche durch ein Schloss 1280 abschliessbar sind. Der Anwender kann daher bestimmte Gegenstände, z.B. giftige Chemikalien, teure Messinstrumente oder persönliche Utensilien abschliessen. Die abschliessbaren Zugangselemente 128 können dabei wiederum Klapptüren, Schiebetüren oder auch Rollläden sein.

In Figur 4a ist gezeigt, dass das Kopfstück 115 der Deckenstütze 11 ringförmig ausgestaltet ist und einen Tragbalken bzw. eine Stange 702 umfasst, welche an beiden Enden über eine Montageschraube 702 mit einem in einer Schiene 71, 72 geführten Laufwerk 70 verbunden ist. Laufwerke 70 dieser Art, die mittels Rollen auf einer Laufschiene 71, 72 abgestützt sind, sind z.B. aus der CH 696208 bekannt. Dabei sind beliebige, einfach oder aufwändig ausgestaltete Laufwerke einsetzbar. Z.B. kann das Laufwerk auf ein Gleitelement reduziert werden, welches innerhalb der zugehörigen Schiene 71; 72 gehalten und geführt ist.

Figur 4a zeigt ferner, dass die Deckenstütze 11 mit einer Fussplatte 116 versehen ist, welche der Montage der Basisplatte 120 der Verkleidung 12 dient.

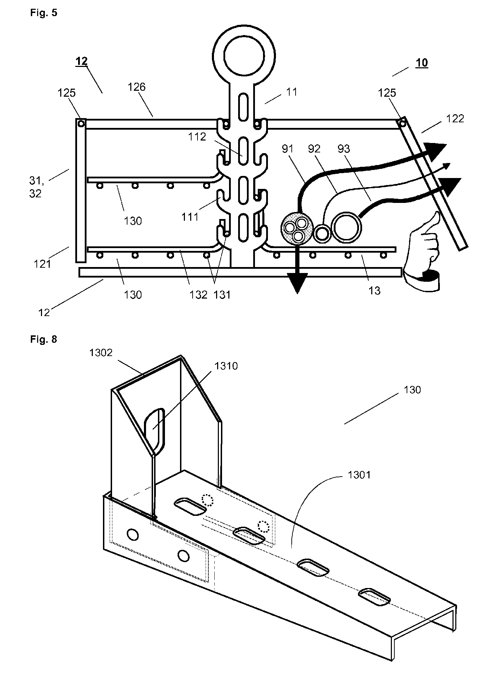

Figur 5 zeigt eine symmetrisch ausgestaltete Versorgungsstation 10 mit einer Deckenstütze 11 die beidseits mit Haken 111 versehen ist und die auf einer Seite zwei Tragvorrichtungen 13 mit Regalen 133 und auf der anderen Seite eine der Lagerung der Versorgungsleitungen 91, 92, 93 dienende Tragvorrichtung 13 trägt. Die Tragvorrichtungen 13 können daher wahlweise als Regal 133 oder für die Aufnahme der Versorgungsleitungen 91, 92, 93 verwendet werden.

Die Deckenstütze 11 trägt ferner eine Deckplatte 126 der Verkleidung 12, an der beidseits je ein Zugangselement 121, 122 von einem Scharnier 125 gehalten ist.

Figur 6 zeigt eine Versorgungsstation 10 mit einer Verkleidung 12, welche ausziehbare Zugangselemente 121, 122 aufweist, die je an der Decke 2 an einem Schienenauszug 1250, 1251 gehalten sind. Die Zugangselemente 121, 122 sind daher in der Art von Schubladen ausziehbar. Dieses Ausführungsbeispiel zeigt, dass die Elemente der Verkleidung 12 direkt mit der Decke 2 verbindbar sind. Eine Zwischendecke, welche bei Mediendecken zwangsläufig entsteht, wird dadurch vermieden. Hohen Ansprüchen an Staubfreiheit und Hygiene kann so entsprochen werden.

Die Tragkonstruktion mit den Deckenstützen 11 kann daher zuerst installiert werden, wonach die Verkleidung 12 unabhängig davon mit der Decke 2 verbunden wird.

In Figur 6 ist ferner gezeigt, dass beliebige Geräte, wie Kommunikationsgeräte 41, Computer 42 oder Messgeräte 43 an die Vorrichtung abschliessbar sind. Z.B. ist gezeigt, dass eine Chromatograph über eine Gasleitung 430 mit einem Anschluss 31 verbunden ist. Weiterhin ist eine Tragvorrichtung 13 mit Auslegern 130 gezeigt, auf denen ein gesonderter Kabelkanal 135 abgelegt ist, der zumindest annähernd U-Profil-förmig ausgestaltet ist.

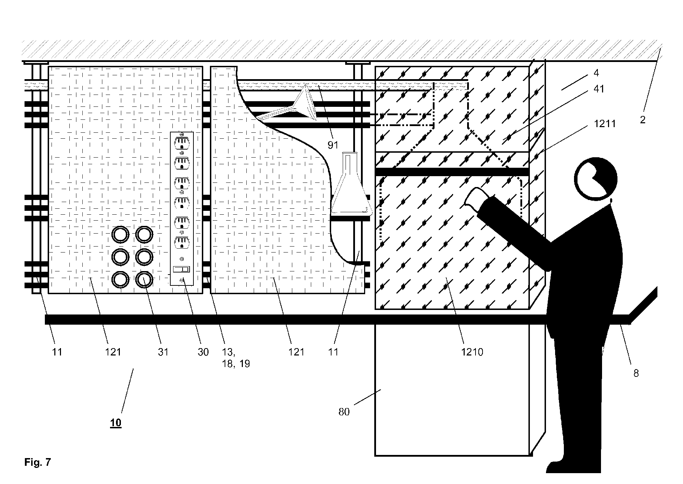

Figur 7 zeigt eine erfindungsgemässe Versorgungsstation 10 mit einer darin integrierten Laborkapelle 4, die Seitenwände 1211 und wenigstens auf einer Seite einen Frontschieber 1210 vorzugsweise aus Verbundsicherheitsglas aufweist, durch die die Laborkapelle 4 dicht abschliessbar ist. Innerhalb der Laborkapelle 4 ist ein Abzug 41 vorgesehen, durch den Gase gesammelt und abtransportiert werden. Die Medien- und Energieversorgung bzw. Entsorgung erfolgt vorteilhaft über die bereits beschriebenen Versorgungsleitungen 91, 92, 93, die seitlich in die Laborkapelle eingeführt werden können. Die Laborkapelle 4 erfordert daher keinen separaten Platz oder einen zusätzlichen freien Raum unterhalb der Decke, sondern kann vorteilhaft in die Vorrichtung 1 integriert werden. Der Abzug 41 kann mittels einer der Deckenstützen 11 oder der Tragvorrichtung 13 gehalten werden, welche dem Halten der Versorgungsleitungen 91, 92, 93 dient. Die Seitenwände 1211 einschliesslich des Frontschiebers 1210 werden in die Verkleidung 12 der Versorgungsstation 10 integriert, welche direkt mit der Decke 2 oder indirekt mit den Deckenstützen 11 verbunden sein kann. Die Laborkapelle 4 besteht daher ebenfalls aus Innenstruktur mit der Abzugsvorrichtung 41 und vorzugsweise einer Beleuchtung sowie einer Außenstruktur, welche eine funktionale Verkleidung der Laborkapelle 4 bildet und den Anwender gegen potentielle Gefahren, giftige Gase, Feuer und Wärme, Explosion und Druck, zuverlässig schützt. Vorzugsweise wird die Verkleidung 1210, 1211 der Laborkapelle 4 an der Decke 2 montiert, so dass die Laborkapelle 4 oben durch die Decke 2, seitlich durch die Glaswände 1211 und unten durch den Labortisch 8 dicht abgeschlossen ist. Unterhalb des Labortisches 8 ist vorzugsweise eine Vorrichtung 80 vorgesehen, durch die Flüssigkeiten abgeführt werden können. Mittels der erfindungsgemässen Vorrichtung 1, 10 kann den in der europäischen Norm EN 14175 gestellten Anforderungen mit verhältnismässig geringem Aufwand entsprochen werden. Besonders vorteilhaft ist, dass die erfindungsgemässe Vorrichtung mit geringem Aufwand aufgebaut und erweitert werden kann. Änderungen des Betriebs und der Infrastruktur des Labors sind mit der erfindungsgemässen Vorrichtung daher leicht realisierbar.

Die Deckenstützen 11 können beliebig ausgestaltet und in beliebiger Weise mit Kopplungselementen 111, 112 versehen sein. Beispielsweise weist die Deckenstütze 11 ein Längsprofil auf, welches mit einer Serie von Öffnungen 112 oder Haken 111 versehen ist, die mit Kopplungselementen 131, 1310 der Tragvorrichtung 13 verbindbar sind. Selbstverständlich können auch Schrauben und Schraubenmuttern verwendet werden, um die Deckenstütze 11 und die Tragvorrichtungen 13 miteinander zu koppeln. Figur 8 zeigt ein Ausführungsbeispiel eines Auslegers 130, welcher einen Tragarm 1301 aufweist, welcher an einem Ende mit einer Montageplatte 1302 versehen ist, die eine Montageöffnung 1310 aufweist. Deckenstützen und Ausleger sowie die gegebenenfalls erforderlichen Kopplungselemente sind beispielsweise aus [9], Produktkatalog der LANZ OENSINGEN AG vom Juni 2009, Seite 75, bekannt.

### Literaturverzeichnis

[1] DE 101 27 272 A1
[2] EP 1684393 A1
[3] DE 10314685 A1
[4] EP 1916749 A2
[5] EP 2058911 A1
[6] EP 0355081 A1
[7] EP 1577995 A1
[8] EP 1594204 A1
[9] Produktkatalog der LANZ OENSINGEN AG vom Juni 2009

## Patentansprüche

1. Vorrichtung (1) für die Medien- und Energieversorgung innerhalb eines Raumes mit wenigstens einer Versorgungsstation (10), in der der Medien- und Energieversorgung dienende Versorgungsleitungen (91, 92, 93) zu Anschlüssen (31, 32, 33) geführt sind, **dadurch gekennzeichnet, dass** die Versorgungsstation (10) wenigstens zwei oberhalb von Arbeitsplätzen (8) mit der Decke (2) des Raumes verbundene Deckenstützen (11) aufweist, an denen erste Kopplungselemente (111; 112) vorgesehen sind, die an wählbarer Position mit zweiten Kopplungselementen (131; 1310) von wenigstens zwei übereinander angeordneten Tragvorrichtungen (13) lösbar verbunden sind, von denen eine zumindest einen Teil der Versorgungsleitungen (91, 92, 93) trägt und dass eine Verkleidung (12) vorgesehen ist, welche die Deckenstützen (11) und die Tragvorrichtungen (13) zumindest auf einer Seite abdeckt und wenigstens ein bewegliches Zugangselement (121, 122) aufweist, nach dessen Öffnung die Tragvorrichtungen (13) mit den Versorgungsleitungen (91, 92, 93) zugänglich sind, die zu den Anschlüssen (31, 32, 33) geführt sind, die an der Verkleidung (12) und/oder an einer innerhalb der Verkleidung (12) vorgesehenen Anschlussvorrichtung (30) montiert sind.

2. Vorrichtung (1) nach Anspruch 1, **dadurch gekennzeichnet, dass** die Tragvorrichtung (13) ein aus geformtem Material oder aus Gitter bestehender Kabelkanal ist, welcher direkt mit den Deckenstützen (11) verbunden ist oder dass die Tragvorrichtung (13) wenigstens zwei Ausleger (130) umfasst, die Regale (133) oder einen Kabelkanal (135) tragen.

3. Vorrichtung (1) nach Anspruch 1 oder 2, **dadurch gekennzeichnet, dass** die Kopfstücke (115) der Deckenstützen (11) mittels Schrauben (5) stationär oder mittels einer Verschiebevorrichtung (7) verschiebbar gelagert mit der Decke (2) verbunden sind und/ oder dass die Deckenstützen (11) ein mit der Verkleidung (12, 120) verbundenes Fussstück (116) aufweisen.

4. Vorrichtung (1) nach Anspruch 1, 2 oder 3, **dadurch gekennzeichnet, dass** die Deckenstützen (11) einseitig oder beidseitig erste Kopplungselemente, wie Haken (111) und/oder Öffnungen (112) aufweisen, in welche die Tragvorrichtung (13) oder Ausleger (130) eingehängt sind, welche zweite Kopplungselemente, wie Stege (131), Öffnungen (1310), Haken oder Schrauben, umfassen.

5. Vorrichtung (1) nach einem der Ansprüche 1 - 4, **dadurch gekennzeichnet, dass** die Deckenstützen (11), die aus einem Teil oder aus zwei in der Höhe verstellbaren Teilen bestehen, einseitig oder beidseitig wenigstens eine Tragvorrichtung (13) tragen.

6. Vorrichtung (1) nach einem der Ansprüche 1 - 5, **dadurch gekennzeichnet, dass** eine Laborkapelle (4) in die Versorgungsstation (10) integriert ist, wobei ein der Entsorgung von Gasen dienender Abzug (41) mittels wenigstens einer der Deckenstützen (11) gehalten und mit wenigstens einer der Versorgungsleitungen (91) verbunden ist.

7. Vorrichtung (1) nach einem der Ansprüche 1 - 6, **dadurch gekennzeichnet, dass** die Laborkapelle (4) direkt an der Decke (2) montierte oder indirekt mit denen Deckenstützen (11) verbundene Verkleidungselemente (1211) aufweist, welche den Raum zwischen der Decke (2) und einer Arbeitsfläche (8) begrenzen und mit wenigstens einem Frontschieber (1210) versehen sind.

8. Vorrichtung (1) nach einem der Ansprüche 1 - 7, **dadurch gekennzeichnet, dass** die vorzugsweise in Gruppen geordneten Anschlüsse (31, 32, 33) am beweglichen Zugangselement (121, 122, 123, 124) und/oder an einem unterhalb der Deckenstützen (111) angeordneten Basiselement (120) der Verkleidung (12) montiert sind.

9. Vorrichtung (1) nach einem der Ansprüche 1 - 8, **dadurch gekennzeichnet, dass** die Verkleidung (12) direkt mit der Decke (2) verbunden ist und/oder dass die Verkleidung (12) von den Deckenstützen (11) gehalten ist.

10. Vorrichtung (1) nach einem der Ansprüche 1 - 9, **dadurch gekennzeichnet, dass** die beweglichen Zugangselemente (121, 122) mittels Verbindungselementen (125), wie Gelenke, Schrauben oder Haken, oder mittels einer an der Decke (2) montierten Auszugsvorrichtung (1250, 1251) gehalten sind.

11. Vorrichtung (1) nach einem der Ansprüche 1 - 10, **dadurch gekennzeichnet, dass** die Verkleidung (12) aus einzelnen Elementen (120, 121, 122, 123, 124) besteht, die einzeln oder in Kombination mit der Decke (2) und/oder den Deckenstützen (11) verbunden sind.

12. Vorrichtung (1) nach einem der Ansprüche 1 - 11, **dadurch gekennzeichnet, dass** wenigstens eines der Zugangselemente (128) durch ein Schloss (1280) abschliessbar ist.

13. Vorrichtung (1) nach einem der Ansprüche 3 - 12, **dadurch gekennzeichnet, dass** die Verschiebevorrichtung (7) wenigstens zwei gleitende oder rollende Laufwerke (70) aufweist, die in voneinander getrennten, mit der Decke (2) verbundenen Schienen (71) geführt sind und die eine Querstrebe (702) halten, welche mit den Kopfstücken (115) der Deckenstützen (11) verbunden ist.

14. Vorrichtung (1) nach einem der Ansprüche 1 - 13, **dadurch gekennzeichnet, dass** einzelne Versorgungsleitungen (91, 92, 93) und Gegenstände (6) des Anwenders voneinander getrennt auf verschiedenen Tragvorrichtungen (13) angeordnet sind.

15. Vorrichtung (1) nach einem der Ansprüche 1 - 14, **dadurch gekennzeichnet, dass** die Tragvorrichtungen (13) mit wenigstens einem Teil der Versorgungsleitungen (91, 92, 93) auf der obersten und/oder der untersten Ebene geführt sind.
